(19) Europäisches Patentamt

European Patent Office

Office européen des brevets

(11) **EP 1 032 168 A2**

(12) **EUROPEAN PATENT APPLICATION**

(43) Date of publication:
**30.08.2000 Bulletin 2000/35**

(51) Int. Cl.[7]: **H04L 25/02**, H04L 25/03, H04B 1/707

(21) Application number: **00301165.7**

(22) Date of filing: **15.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **22.02.1999 US 255088**

(71) Applicant:
**LUCENT TECHNOLOGIES INC.**
**Murray Hill, New Jersey 07974-0636 (US)**

(72) Inventor: **Qiu, Robert Caiming**
**Morris Plains, New Jersey 07950 (US)**

(74) Representative:
**Buckley, Christopher Simon Thirsk et al**
**Lucent Technologies Inc.,**
**5 Mornington Road**
**Woodford Green, Essex IG8 0TU (GB)**

(54) **Channel estimation, using interpolation based on Lagrange polynomials**

(57)    For digital mobile radio transmission, a new method of measuring and correcting the distortion in a transmission channel is provided. Known pilot symbols are inserted in the data stream. At a receiver, distortion of the known values of the pilot symbols represents the channel distortion. Lagrange interpolation of the received values of the known pilot symbols is used to estimate the channel distortion within the pilot symbols.

FIG 6

EP 1 032 168 A2

## Description

### Field Of The Invention

This invention is related to digital signal processing, particularly to compensate for channel distortion in digital mobile radio transmission.

### Background Of The Invention

Digital mobile radio communication is plagued by distortion in the transmission channel. The Doppler effect due to a moving transmitter or receiver and multiple paths of propagation due to reflection are two principal causes of this distortion. Compensating for this distortion is particularly important in a Direct Sequence Code Division Multiple Access (DS-CDMA) system. Accurate channel distortion compensation enables the DS-CDMA system to operate in a coherent delay-locked tracking loop (DLL) mode which has numerous advantages over a noncoherent delay-locked tracking mode. Coherent DLL mode of operation reduces the background noise by as much a 3 dB compared to the noncoherent DLL mode and, for the same BER (Bit Error Rate), requires less transmitted power output.
Distortion in a digital mobile radio channel is predominately manifested as amplitude and phase variation of the channel gain. If the channel gain can be accurately estimated, then good compensation for the channel distortion may be achieved. One approach to obtaining a good estimate of the channel gain is based on insertion of known symbols at regular intervals in the data stream. When these symbols are recovered in the receiver any deviation from their known values is taken to be caused by the time-varying channel gain. From these deviations, the channel gain may be estimated. Various methods are known for such insertion and recovery of known symbols, but all are subject to limitations. For example, one such estimation method uses only a few symbols at a time which makes this method vulnerable to noise. Another exemplary method uses an experimental method to determine a fixed set of estimation formulae. These fixed estimation formulae do not adjust to the changing conditions that exist during operation in a real channel.

### Summary Of The Invention

The present invention provides an efficient method of estimating and compensating for the rapid amplitude and phase fluctuations in a digital mobile radio transmission system based on the insertion of known pilot symbols periodically into the data stream. Multiple consecutive symbols are inserted and the consecutive received values averaged to overcome random noise. These averaged values provide samples of the complex, random channel gain. These samples are used for interpolation by the Lagrange polynomial method to yield the values of amplitude and phase distribution undergone by each channel data symbol.

### Brief Description Of The Figures

Figure 1 is a block diagram of a typical DS-CDMA receiver.

Figure 2 is a diagram of quadrature phase shift keying (QPSK) modulation

Figure 3 is a diagram of a data stream divided into blocks with pilot symbols inserted at the beginning of each block.

Figure 4 depicts a basic channel estimation and compensation processor.

Figure 5 depicts a channel estimation and compensation processor using the weighted multi-slot averaging (WMSA) method.

Figure 6 depicts a channel estimation and compensation processor according to the method of the invention.

### Detailed Description

The invention is directed to an improved method for determining channel gain in a wireless communications system where data is transmitted in a digital mode. Application of the methodology of the invention is described hereafter in terms of a preferred embodiment based on a DS-CDMA wireless system. It will, however, be apparent to those skilled in the art that the inventive methodology may be applied for a variety of digital wireless systems.

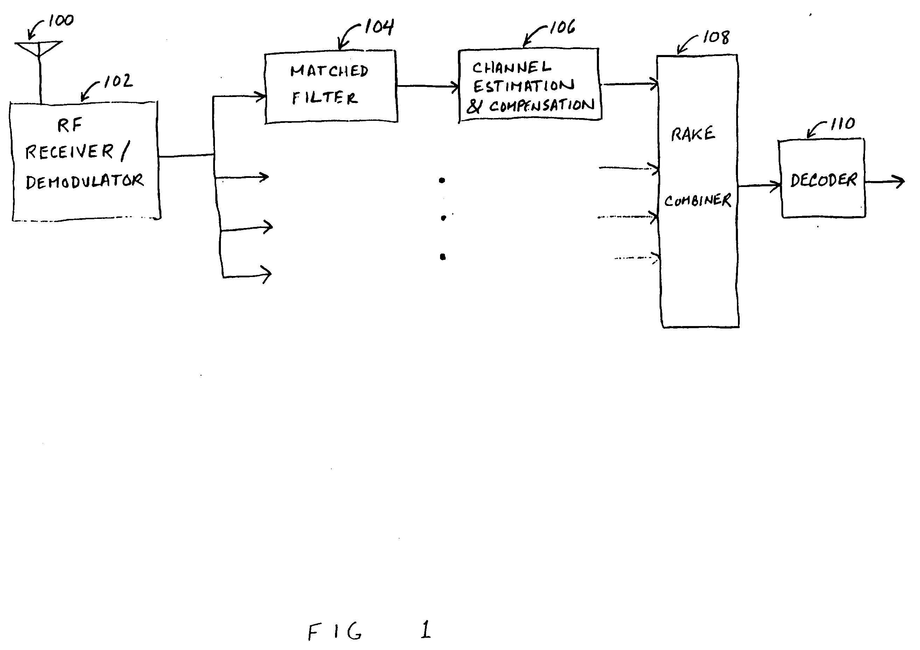

Figure 1 is a block diagram of a typical DS-CDMA receiver system of the present art. An antenna **100** receives a spread-spectrum radio frequency (RF) signal. A typical carrier frequency is 2 gigahertz (GHz) with a typical bandwidth of 5 megahertz (MHz). An RF receiver/demodulator **102** converts down from the carrier frequency. The result is an analog baseband signal, modulated by an encoded data stream, typically at 32 kilobits per second (kbps), and re-modulated by a spreading signal, typically at 4.096 megachips per second (Mcps). ("Chip" is the standard term for one cycle time of a spreading signal.) A matched filter **104** removes the spreading signal by correlation with the phase of the spreading signal. The remaining analog baseband signal is processed by a channel estimation and compensation processor **106** to produce an estimate of the encoded data.

Because the RF signal received at antenna **100** will generally include the superposition of multiple images of the source transmission -- representing different paths of propagation with different delays -- multiple instances of the filter **104** and compensation processor **106** may be used to extract an estimate of the encoded data stream from each of several of the strongest paths of propagation. A RAKE combiner **108** linearly combines these estimates to produce a higher confidence combined estimate of the original encoded data. Finally, a decoder **110** extracts the original data transmission.

The signal at the input of a channel estimation and compensation processor **106** is a modulated baseband signal distorted by propagation though the channel and by random noise. Data modulation may be based on any known methodology, but for purposes of the illustrative embodiment of the invention is taken to be quadrature phase shift keying (QPSK), which represents a data stream as a sequence of four-state symbols.

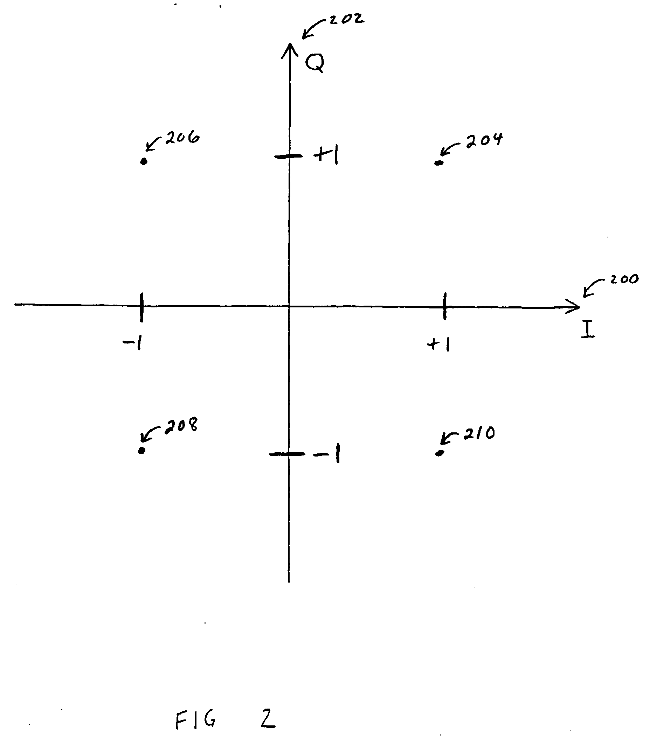

Figure 2 illustrates the four QPSK symbol states. An in-phase baseband carrier signal **I 200** is set to a + 1 state or a -1 state, the latter being 180 degrees away from a + 1 state. Similarly, a quadrature baseband carrier signal **Q 202** is set to a + 1 state or a - 1 state, the latter being 180 degrees away from a + 1 state. **I** and **Q** signals are combined to produce a two-dimensional signal with the four states **204**, **206**, **208**, and **210** shown in Figure 2.

For mathematical convenience, a time sequence of two-dimensional signals like those of a QPSK modulation may be represented as a complex function of time. Let complex time function $z(t)$ be the originally transmitted QPSK-modulated baseband signal. Then the signal at the input of a channel estimation and compensation processor 106 is:

$$u(t) = c(t)z(t) + n(t) \qquad \text{[Equation 1]}$$

where $c(t)$ is the complex, time-varying channel gain and $n(t)$ is random noise. If one can compute a good estimate of $c(t)$ (denoted hereafter as $\hat{c}(t)$) and $n(t)$ is negligibly small or reduced to insignificance by averaging, then a good estimate of $z(t)$ is:

$$\hat{z}(t) = \frac{u(t)}{\hat{c}(t)} \qquad \text{[Equation 2]}$$

Equation 2 can be rearranged to solve for $\hat{c}(t)$ and accordingly the approximate value of the channel distortion at any instant may be calculated from the values of the received signal and the original signal at that instant. If known pilot symbols with values $p$ are inserted in the original signal at specific points in time, then the original signal is known at those points and the value of the channel distortion at those points may be calculated from the value of the received signal at those points and the original pilot signal values. The "channel estimation" is then derived as an interpolation of these sample values of the channel function at the pilot signal points.

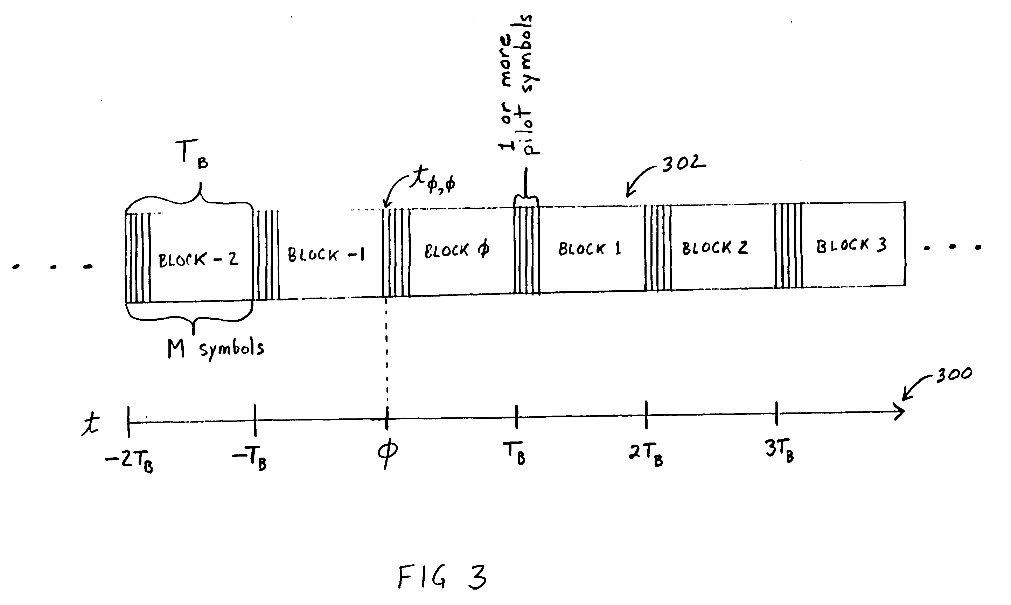

Figure 3 shows a data stream **302** divided into ordered, consecutive blocks of M symbols each. The period of transmission of each block is $T_B$. At the beginning of each block, one or more known pilot symbols are inserted in the data stream **302**.

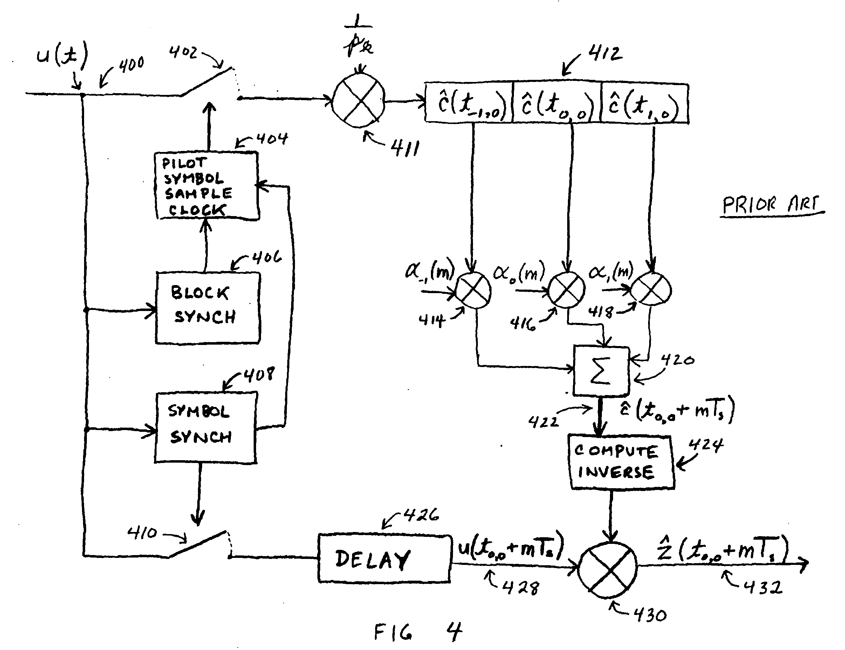

Figure 4 is a diagram of a channel estimation and compensation processor that uses inserted pilot symbols according to the method of Sampei and Sunaga (S. Sampei and T. Sunaga, "Rayleigh Fading Compensation for QAM in Land Mobile Radio Communications", *IEEE Transactions on Vehicular Technology*, Vol. 42, No. 2, May 1993, pp. 137-147). An input analog baseband signal $u(t)$ **400** is provided to and processed by a symbol synchronization module **408** and a block synchronization module **406**. Outputs of the symbol and block synchronization modules are processed to produce a pilot symbol sample clock **404** that controls an analog-to-digital sample circuit **402** (depicted with a switch-like symbol), which operates to cause digital values of pilot symbol signals to be sent to the complex multiplier **411**. The output of the complex multiplier **411** represents an estimate of the channel gain at the time of a particular pilot symbol. This estimate is sent to delay line **412**.

The symbol synchronization module **408** also controls an analog-to-digital sample circuit **410** (depicted with a switch-like symbol) that operates to cause digital values of the input baseband signal $u(t)$ **400** at each symbol time to be stored in a delay line **426**.

Considering Figure 3 and Figure 4 together now, a method for estimation of channel gain for the symbols in an arbitrarily chosen block 0 in the data stream **302** of Figure 3 will be described. With reference to the time frame **300** in Figure 3, a symbol sample time

$$t_{k,m} = NT_B + \left(\frac{m}{N}\right)T_B \qquad \text{[Equation 3]}$$

is the sample time of the $m$th symbol in the $k$th block. To compute channel gain estimates for symbols in block 0, pilot symbols are sampled at $t_{-1,0}$, $t_{0,0}$, and $t_{1,0}$, -- *i.e.,* there is one pilot symbol at the beginning of each block, and the symbols from blocks -1, 0, and 1 are used for channel estimation. For each input pilot symbol sample $u(t_{k,0})$, complex multiplier **411** computes

$$\hat{c}(t_{k,0}) = u(t_{k,0})/p_k = c(t_{k,0}) + n(t_{k,0})/p_k \qquad \text{[Equation 4]}$$

where $p_k$ is the known value of the pilot symbol at the beginning of data block $k$. These channel gain estimates are stored in the delay line **412**.

Complex multipliers **414**, **416**, and **418** are used to multiply the channel gain estimates in the delay line **412** by appropriate weighting coefficients $\alpha_1(m)$, $\alpha_0(m)$, and $\alpha_1(m)$, and the multiplier results are summed in complex adder **420**. [Values of the coefficients $\alpha$ are determined empirically according to known methods.] The resulting sum **422** (at output of adder **420**) is therefore represented algebraically as:

$$\hat{c}(t_{0,m}) = \hat{c}(t_{0,0} + mT_s) = \hat{c}(t_{0,0} + \frac{m}{N}T_B) = \alpha_{-1}(m)\hat{c}(t_{-1,0}) + \alpha_0(m)\hat{c}(t_{0,0}) + \alpha_1(m)\hat{c}(t \quad )$$

$$\text{[Equation 5]}$$

with $T_s$ defined to be the symbol period.

Equation 5 constitutes a second-order Gaussian interpolation of the value of the estimated channel gain at the symbol sample time of the $m$th symbol in an arbitrarily selected block 0 based on the estimated values of the channel gain at the pilot symbol sample times stored in delay line **412**.

The inverse of resulting sum **422** is then computed by complex multiplicative inverter **424**. A baseband symbol sample **428** is generated by delay line **426**, where the delay is established to synchronize that baseband symbol sample with the computation of the estimated channel gain at the same sample time. Complex multiplier **430** then multiplies the output of inverter **424** with symbol sample **428** to generate an estimate of an original data symbol **432** in accordance with Equation 2.

Because the method of channel estimation just described inserts only one pilot symbol per data block and uses the pilot symbols from only three data blocks, the method is highly vulnerable to corruption by noise.

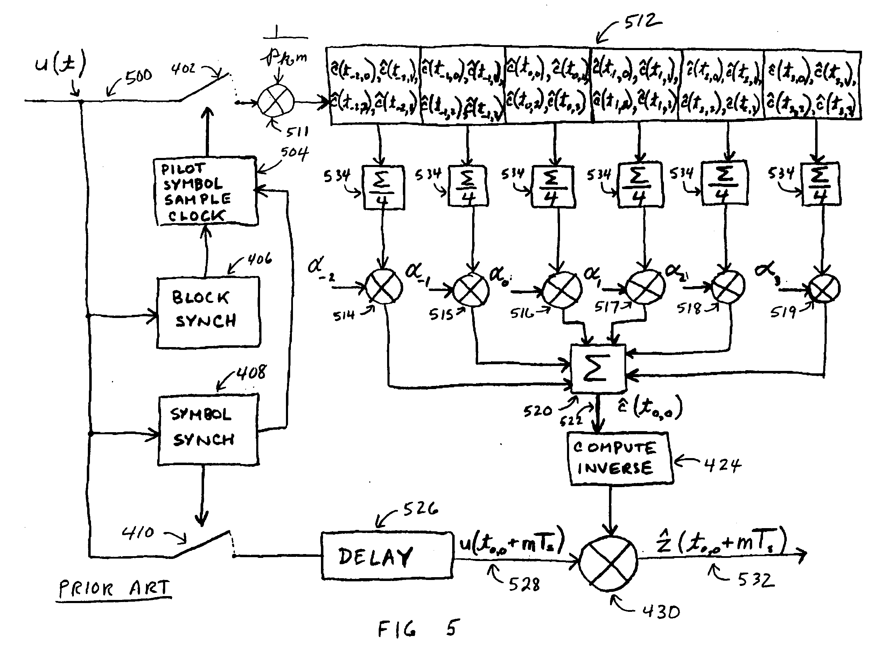

In Figure 5, a channel estimation and compensation processor is depicted that uses inserted pilot symbols according to the method of Andoh, Sawahashi, and Adachi (See H. Andoh, M. Sawahashi, and F. Adachi, "Channel Estimation Using Time Multiplexed Pilot Symbols for Coherent Rake Combining for DS-CDMAS Mobile Radio", (IEEE, PIMRC'97, Helsinki, Finland, September 1-4, 1997), that method being known as weighted multi-slot averaging (WMSA). With this method, an input analog baseband signal $u(t)$ **500** is processed by a symbol synchronization module **408** and a block synchronization module **406**. Outputs of the symbol and block synchronization modules are processed to produce a pilot symbol sample clock **504** that controls an analog-to-digital sample circuit **402** (depicted with a switch-like symbol) to cause digital values of pilot symbol signals to be sent to complex multiplier **511**. The output of complex multiplier **511** represents an estimate of the channel gain at the time of a particular pilot symbol. This estimate is sent to delay line **512**.

The symbol synchronization module **408** also controls an analog-to-digital sample circuit **410** (depicted with a switch-like symbol) that operates to cause digital values of the input baseband signal $u(t)$ **500** at each pilot symbol time to be stored in a delay line **526**.

With reference back to Figure 3, the estimation of channel gain for the symbols in an arbitrarily chosen block 0 in the data stream **302** will be described for the WMSA method using the channel estimation and compensation processor of Figure 5. A symbol sample time, as depicted in Figure 3 and defined by Equation 3 above, is the sample time of the $m$th symbol in the $k$th block. Pilot symbols are sampled at $t_{k,m}$, where $k$ = -2, -1, 0, 1, 2, 3 and $m$ = 0,1, 2, 3 -- *i.e.*, there are four pilot symbols at the beginning of each block, and the symbols from blocks -2, -1, 0, 1, 2, and 3 are used for channel estimation. For each input pilot symbol sample $u(t_{k,m})$, the complex multiplier **511** computes

$$\hat{c}(t_{k,m}) = u(t_{k,m})/p_{k,m} = c(t_{k,m}) + n(t_{k,m})/p_{k,m} \qquad \text{[Equation 6]}$$

where $k$ = -2, -1, 0, 1, 2, 3, $m$ = 0, 1, 2, 3, and $p_{k,m}$ is the known value of a pilot symbol at position $m$ in block $k$. These channel gain estimates are stored in the delay line **512**.

Complex averaging modules **534** are used to average the four channel-gain estimates associated with four consecutive pilot symbols at the start of each block that are stored in the delay line **512**. This averaging minimizes the error associated with the noise term of Equation 4. The noise-term error is, of course, greater for the method described in conjunction with Figure 4, which does not use such averaging.

Complex multipliers **514**, **515**, **516**, **517**, **518**, and **519** are used to multiply the outputs of averaging modules **534** by appropriate weighting coefficients $\alpha_{-2}$, $\alpha_{-1}$, $\alpha_{-0}$, $\alpha_{-1}$, $\alpha_2$, and $\alpha_3$, and the multiplier results are summed in complex adder **520**. The resulting sum **522** (at the output of adder **520**)is therefore represented algebraically as:

$$\hat{c}(t_{0,0}) = \hat{c}(t_{0,m}) = \sum_{k=-2}^{3} \frac{\alpha_k}{4} \sum_{m=0}^{3} \hat{c}(t_{k,m}) \qquad \text{[Equation 7]}$$

From this equation, it can be seen that the channel gain estimate $\hat{c}(t_{0,0})$ is used for all symbol samples times in block 0, regardless of the value of $m$. Also note that the $\alpha$ coefficients are independent of m. For the WMSA method, these coefficients are derived empirically by adjusting them during experiments to achieve the best performance for a particular set of actual channel conditions. However, these coefficients are held constant during actual operation -- *i.e.*, they do not adjust dynamically to changing conditions

The inverse of resulting sum **522** is then computed by complex multiplicative inverter **424**. A baseband symbol sample **528** is generated by delay line **526**, where the delay is established to synchronize that baseband symbol sample with the computation of the estimated channel gain at the same sample time. Complex multiplier **430** then multiplies the output of inverter **424** with symbol sample **528** to generate an estimate of an original data symbol **532** in accordance with Equation 2.

In summary, this WMSA method of estimating channel gain has better noise tolerance than the first method because of averaging of consecutive pilot symbols, but it uses static formulae for interpolation and does not dynamically adjust to changing channel conditions.

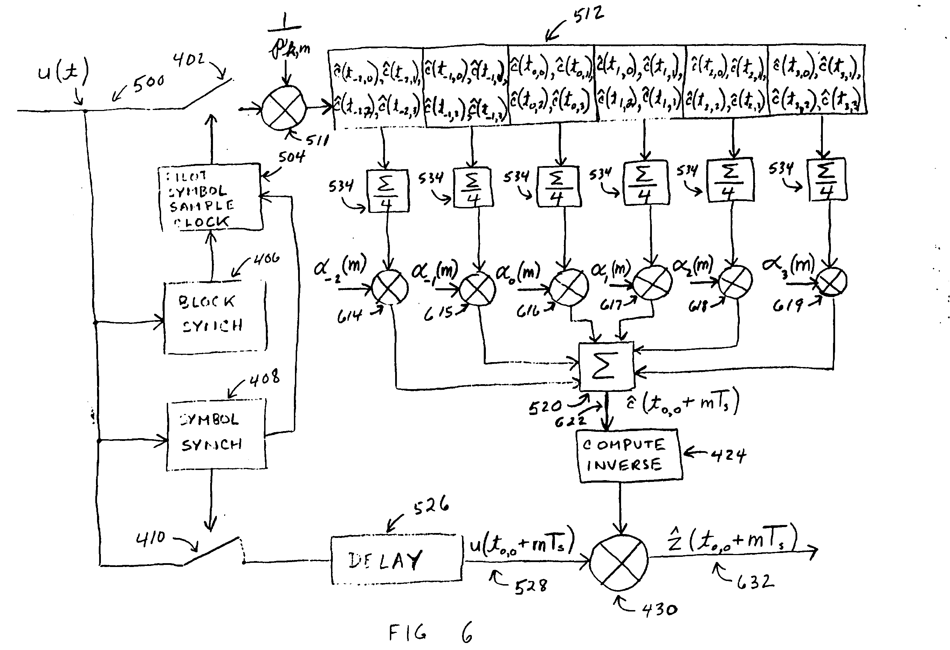

An adaptation of the methodology for determining channel gain based on inserted pilot symbols, according to the method of the invention, is hereafter described in conjunction with the channel estimation and compensation processor depicted in Figure 6. An input baseband signal $u(t)$ **500** is processed by a symbol synchronization module **408** and a block synchronization module **406**. Outputs of the symbol and block timing modules are processed to produce a pilot symbol sample clock **504** that controls an analog-to-digital sample circuit **402** (depicted with a switch-like symbol) to cause digital values of pilot symbol signals to be sent to the complex multiplier **511**. The output of the complex multiplier **511** represents an estimate of the channel gain at the time of a particular channel symbol. This estimate is sent to the delay line **512**.

The symbol synchronization module **408** also controls an analog-to-digital sample circuit **410** (depicted with a switch-like symbol) that operates to cause digital values of the input baseband signal $u(t)$ **500** at each pilot symbol time to be stored in a delay line **526**.

The estimation of channel gain according to the method of the invention, for the symbols in an arbitrarily chosen block 0 in the data stream **302** of Figure 3, will now be described in relation to the functional elements of the channel estimation and compensation processor of Figure 6. A symbol sample time, as depicted in Figure 3 and defined by Equation 3 above, is the sample time of the $m$th symbol in the $k$th block. Pilot symbols are sampled at $t_{k,m}$ where $k$ = -2, -1, 0, 1, 2, 3 and $m$ = 0, 1, 2, 3 -- that is, there are four pilot symbols at the beginning of each block, and the symbols from blocks -2, - 1, 0, 1, 2, and 3 are used for channel estimation.. For each input pilot symbol sample $u(t_{k,m})$, channel gain estimates are computed according to Equation 6 by complex multiplier **511**. These channel gain estimates are then stored in the delay line **512**.

Complex averaging modules **534** are used to average the four channel gain estimates associated with the four consecutive pilot symbols at the start of each block that are stored in the delay line **512**. This averaging operates to minimize the error associated with the noise term of Equation 4. It should be understood, as well, that the use of more than four symbols per block would effect an even better cancellation of the noise error. Accordingly, while the preferred embodiment of the inventive methodology is based on the use of four symbols per block, that method also contemplates the use of a greater number of symbols.

Complex multipliers **614**, **615**, **616**, **617**, **618**, and **619** are used to multiply the outputs of averaging modules **534** by appropriate weighting coefficients $\alpha_{-2}(m)$, $\alpha_{-1}(m)$, $\alpha_0(m)$, $\alpha_{-1}(m)$, $\alpha_2(m)$, and $\alpha_3(m)$, and the multiplier results are summed in complex adder **520**. The resulting sum **622** (at the output of adder **520**) is therefore represented algebraically as:

$$\hat{c}(t_{0,m}) = \hat{c}(t_{0,0} + mT_s) = \hat{c}(t_{0,0} + \frac{m}{N}T_B) = \sum_{k=-2}^{3} \frac{\alpha_k(m)}{4} \sum_{m=0}^{3} \hat{c}(t_{k,m}) \quad \text{[Equation 8]}$$

The $\alpha$ coefficients are determined as follows

$$(\text{with } q = \frac{m}{N}):$$

$$\alpha_{-2}(m) = \frac{-q(q^2 - 1)(q - 2)(q - 3)}{120} \qquad \text{[Equation 9]}$$

$$\alpha_{-1}(m) = \frac{q(q - 1)(q^2 - 4)(q - 3)}{24} \qquad \text{[Equation 10]}$$

$$\alpha_0(m) = \frac{-(q^2-1)(q^2-4)(q-3)}{12} \qquad \text{[Equation 11]}$$

$$\alpha_1(m) = \frac{q(q+1)(q^2-4)(q-3)}{12} \qquad \text{[Equation 12]}$$

$$\alpha_2(m) = \frac{-q(q^2-1)(q+2)(q-3)}{24} \qquad \text{[Equation 13]}$$

$$\alpha_3(m) = \frac{q(q^2-1)(q^2-4)}{12} \qquad \text{[Equation 14]}$$

Equations 8 through 14 constitute a fifth-order (six point) Lagrange polynomial interpolation of the value of the estimated channel gain at the symbol sample time of any symbol in block 0 from the estimated values of the channel gain at the pilot symbol sample times stored in delay line **512**. According to the method of the invention, such interpolation may be made with a Lagrange interpolation of any order ($r$ - 1), using the corresponding $r$ blocks centered on block 0, and using any number $P < N$ of pilot symbols at the beginning of each block. The resulting channel gain estimates are:

$$\hat{c}(t_{0.m}) = \hat{c}(t_{0.0} + mT_s) = \hat{c}(t_{0.0} + \frac{m}{N}T_B) = \sum_k \frac{\alpha_k(m)}{P} \sum_{m=0}^{P-1} \hat{c}(t_{k.m}) \qquad \text{[Equation 15]}$$

where $-0.5(r-2) \le k \le 0.5\,r$ for even $r$. and $-0.5(r-1) \le k \le 0.5\,(r-1)$ for odd $r$.

In this general case, the a coefficients are determined as follows

$$\text{(with } q = \frac{m}{N} \text{)}$$

For even $r$:

$$\alpha_k(m) = \frac{(-1)^{0.5r-k}}{(0.5r-1+k)! \quad (0.5r-k)!(q-k)} \prod_{a=1}^{r} (q + 0.5r - a) \qquad \text{[Equation 16]}$$

For odd $r$:

$$\alpha_k(m) = \frac{(-1)^{0.5(r-1)+k}}{(0.5r-0.5+k)! \, [0.5(r-1)-k]!(q-k)} \prod_{a=0}^{r-1} [q + 0.5(r-1)-a] \qquad \text{[Equation 17]}$$

With reference again to the channel estimation and compensation processor of Figure 6, the inverse of resulting sum **622** is then computed by complex multiplicative inverter **424**. A baseband symbol sample **528** is generated by delay line **526**, where the delay is established to synchronize that baseband symbol sample with the computation of the estimated channel gain at the same sample time. Complex multiplier **430** then multiplies the output of inverter **424** with symbol sampl**e 528** to generate an estimate of an original data symbol **632** in accordance with Equation 2.

## Conclusion

A channel estimation methodology has been described that operates on one or more consecutive pilot symbols per data block and incorporates Lagrange interpolation of the estimated channel gain between pilot symbols. The parameters of this interpolation adjust dynamically to changing channel conditions.

Although the methodology of the invention, and illustrative applications of that methodology, have been described in detail, it should be understood that various changes, alterations, and substitutions can be made therein without departing from the spirit and scope of the invention as defined by the appended claims.

**Claims**

1. A method for recovering a data signal having a plurality of data blocks wherein each said data block includes a plurality of coded data bits and a plurality of known pilot bits, said method comprising the steps of:

   estimating an amount of channel distortion in a received data signal based on comparison of received data signal relative to said known pilot bits;

   applying a Lagrange Polynomial Interpolation to said estimated channel distortion to provide a weighted estimate of channel distortion;

applying said weighted estimate of channel distortion to each of said data blocks to compensate for said channel distortion.

2. The method according to Claim 1, wherein said step of estimating channel distortion includes;

estimating said channel distortion from amplitude or phase information of said plurality of received pilot bits.

3. The method according to Claim 2 wherein:

said estimate of channel distortion is made by computing an average amplitude value and an average phase value of said plurality of received pilot bits in said data blocks.

4. The method according to Claim 1 wherein:

said estimate of channel distortion is made by computing an average amplitude of said plurality of received pilot bits in said data blocks.

5. The method according to Claim 2 wherein:

said estimate of channel distortion is made by computing an average phase of said plurality of received pilot bits in said data blocks.

6. The method according to Claim 1 wherein said step of applying a Lagrange Polynomial Interpolation includes the substep of:

applying a Lagrange Polynomial Interpolation of order R-1 to said estimate of channel distortion of R data blocks.

7. The method according to Claim 6 wherein:

the weighting coefficients of said Lagrange Polynomial Interpolation are expressed by Equation 16 and Equation 17 of the specification.

8. In a receiving system for receiving a data stream comprised of a plurality of data blocks, said data blocks containing a plurality of known pilot bits and a plurality of coded data bits, a channel estimation and compensation processor comprising:

distortion compensation means operative to determine a channel distortion parameter utilizing a Lagrange Polynomial Interpolation weight factor algorithm: and

means for determining an estimate of channel distortion from said channel distortion parameter and applying said channel distortion estimate to said plurality of data blocks.

9. The channel estimation and compensation processor of claim 8 further comprising:

a storage means for storing a portion of signal parameters of said plurality of pilot bits, said signal parameters being an estimate of channel distortion in related data blocks, and for storing at least one of said plurality of data blocks delayed in time by a predetermined time increment;

means to normalize each said estimate of channel distortion stored in said storage means, and means for applying said Lagrange Polynomial Interpolation computed weighting factors to each said normalized estimate of channel distortion;

means for summing each said weighted normalized estimate of channel distortion, said sum being a estimate of channel distortion; and

means for applying said estimate of channel distortion to said stored, delayed data block.

**10.** The channel estimation and compensation processor of Claim 9 wherein:

said signal parameters are determined as an algebraic function of measured amplitude and phase values of said plurality of received pilot bits.

**11.** The channel estimation and compensation processor of Claim 9 wherein:

said signal parameters are determined as an algebraic function of measured amplitude values of said plurality of received pilot bits.

**12.** The channel estimation and compensation processor of Claim 9 wherein:

said signal parameters are determined as an algebraic function of measured phase values of said plurality of pilot bits.

**13.** The channel estimation and compensation processor of Claim 9 wherein:

said signal parameters stored in said storage means correspond to a predetermined number, R, of said data blocks.

**14.** The channel estimation and compensation processor of Claim 13 wherein:

said predetermined delay time increment is a first value if R is even and a second value if R is odd.

**15.** The channel estimation and compensation processor of Claim 14 wherein:

said first value of said predetermined delay time increment is equal to the integer value of (R/2+1) and said second value of said predetermined delay time increment is equal to the integer value of R/2.

**16.** The channel estimation and compensation processor of Claim 13 wherein:

said Lagrange Polynomial Interpolation weight factors are computed using a Lagrange Polynomial Interpolation of order (R-1)

**17.** The channel estimation and compensation processor of Claim 14 wherein:

said weight factors are expressed in Equations 16 and 17 of the specification.

FIG 1

FIG 2

FIG 3

EP 1 032 168 A2

PRIOR ART

FIG 4

FIG 5

PRIOR ART

FIG 6